# EUROPEAN PATENT APPLICATION

(11) **EP 4 227 881 A1**
(43) Date of publication of application: **16.08.2023**
(21) Application number: 21877495.8
(22) Date of filing: 30.09.2021
(51) Int. Cl.: G06Q 30/02, G06Q 50/10

(54) **INFORMATION PROCESSING DEVICE, METHOD FOR OPERATING INFORMATION PROCESSING DEVICE, PROGRAM FOR OPERATING INFORMATION PROCESSING DEVICE, AND INFORMATION MANAGEMENT SYSTEM**

(30) Priority: 05.10.2020 JP 2020168545
(71) Applicant: FUJIFILM Corporation, Tokyo 106-8620 (JP)
(72) Inventor: TERAYOKO, Hajime, Ashigarakami-gun, Kanagawa 258-8577 (JP); SONODA, Shinichiro, Ashigarakami-gun, Kanagawa 258-8577 (JP); TANAKA, Nobuya, Ashigarakami-gun, Kanagawa 258-8577 (JP); YOSHIZAWA, Hirotoshi, Ashigarakami-gun, Kanagawa 258-8577 (JP)
(74) Representative: Meissner Bolte Partnerschaft mbB
(86) International application number: PCT/JP2021/036242
(87) International publication number: WO 2022/075194

(57) **Abstract**

An information processing apparatus includes at least one processor, in which the processor is configured to acquire an image of a participant participating in an event, and output a two-dimensional code in which attribute information indicating an attribute of the participant estimated based on the image and identification information assigned for each participant are coded.

## Description

### BACKGROUND OF THE INVENTION

### 1. Field of the Invention

The disclosed technology relates to an information processing apparatus, an operation method of an information processing apparatus, an operation program of an information processing apparatus, and an information management system.

### 2. Description of the Related Art

JP2018-067121A discloses a management system that manages entering and exiting of an event venue and entering and exiting of a booth provided in the venue by a visitor. The management system receives an input of personal information from the visitor, images a face of the visitor via a camera, and prints a visitor card (refer to Fig. 8 in JP2018-067121A) used as an ID card of the visitor via a printer. The personal information input by the visitor is a name, a department, and the like. For example, the department is a name of an organization such as a company for which the visitor works. The name, the department, and a face photo of the visitor, and a two-dimensional code are printed on the visitor card. The two-dimensional code is information in which the input name and department of the visitor are coded.

In JP2018-067121A, a scanner is installed near each booth in the event venue and near an exit. The number of users of each booth and the number of exiting people are counted by causing the visitor to scan the two-dimensional code of the visitor card via the scanner before using the booth and before exiting.

JP2006-3135305A discloses a visitor card (identification data (ID) card: refer to Fig. 1 in JP2006-3135305A) similar to the visitor card in JP2018-067121A. On the visitor card in JP2006-3135305A as well, personal information such as a name and a department of a visitor input by the visitor and a two-dimensional code in which the personal information is coded are recorded in addition to a face photo of the visitor.

### SUMMARY OF THE INVENTION

As disclosed in JP2018-067121A and in JP2006-3135305A, the personal information including the name and the department is recorded on the visitor card. Thus, an operator who operates a customer-attracting facility such as an event venue and a shopping mall can collect the personal information of the visitor by using the visitor card and the management system.

However, an input procedure of the personal information is complicated for the visitor. Furthermore, there are many people who are reluctant to providing the personal information. Particularly, this tendency is strong for visitors of a customer-attracting facility such as a shopping mall for which a reservation is not necessary for entering, unlike a customer-attracting facility such as a movie theater for which a reservation is necessary for entering. Thus, for example, even in a case where a free event is organized in the customer-attracting facility, there are many visitors who hesitate about or avoid participating in the event in a case where provision of the personal information is necessary.

Even in a case where accurate personal information of visitors cannot be acquired, the operator of the customer-attracting facility strongly wants visitors to participate in the event and wants to collect general attributes, for example, a sex, an age, and a family composition, of participants of the event.

An object of the disclosed technology is to provide an information processing apparatus, an operation method of an information processing apparatus, an operation program of an information processing apparatus, and an information management system that can collect attribute information of a participant useful for an operation side of a customer-attracting facility while reducing an input procedure of personal information by the participant participating in an event compared to the related art.

An information processing apparatus according to an aspect of the present disclosure comprises at least one processor, in which the processor is configured to acquire an image of a participant participating in an event, and output a two-dimensional code in which attribute information indicating an attribute of the participant estimated based on the image and identification information assigned for each participant are coded.

It is preferable that the two-dimensional code is outputable to a printer.

It is preferable that the image is also outputable to the printer in addition to the two-dimensional code.

It is preferable that the processor is configured to store the attribute information and the identification information in a database in association with each other.

It is preferable that the processor is configured to receive behavior information of the participant corresponding to the two-dimensional code, and store the received behavior information in the database in association with the identification information included in the two-dimensional code.

It is preferable that the processor is configured to receive a viewing request including the two-dimensional code, and output the behavior information stored in the database in association with the identification information included in the two-dimensional code to a request source of the viewing request.

It is preferable that the processor is configured to output a counting result obtained by counting the behavior information stored in the database for each identification information included in the two-dimensional code.

It is preferable that in a case where the event is held in a customer-attracting facility tenanted by a plurality of stores, the behavior information includes at least one of a store name at which the participant has purchased a product, a purchase time point, a list of the purchased product, a quantity of the product, or a price of the product.

It is preferable that the behavior information is acquired through a shopping information management system operated by the stores.

It is preferable that the attribute information includes at least one of a sex or an age of the participant estimated from the image.

It is preferable that in a case where a plurality of participants are captured in the image, the attribute information includes a personal relationship among the plurality of participants estimated from the image.

It is preferable that the processor is configured to estimate the attribute information by performing image analysis on the image.

It is preferable that the image is a video image, and the attribute information is information obtained by averaging the attributes estimated based on images of a plurality of frames included in the video image.

An operation method of an information processing apparatus according to another aspect of the present disclosure comprises acquiring an image of a participant participating in an event, and outputting a two-dimensional code in which attribute information indicating an attribute of the participant estimated based on the image and identification information assigned for each participant are coded.

An operation program of an information processing apparatus according to still another aspect of the present disclosure causes a computer to function as an acquisition unit that acquires an image of a participant participating in an event, and an output unit that outputs a two-dimensional code in which attribute information indicating an attribute of the participant estimated based on the image and identification information assigned for each participant are coded.

An information management system according to still another aspect of the present disclosure comprises a reception apparatus including a camera and a printer, and an information processing apparatus communicably connected to the reception apparatus, in which the camera acquires an image of a participant participating in an event, the information processing apparatus includes at least one processor, the processor is configured to output, to the printer, a two-dimensional code in which attribute information indicating an attribute of the participant estimated based on the image acquired through the camera and identification information assigned for each participant are coded, and the printer prints the image and the two-dimensional code on one card.

It is preferable that the card is an instant film.

According to the disclosed technology, it is possible to collect attribute information of a participant useful for an operation side of a customer-attracting facility while reducing an input procedure of personal information by the participant participating in an event compared to the related art.

### BRIEF DESCRIPTION OF THE DRAWINGS

Fig. 1 is a schematic diagram of an information management system.
Fig. 2 is a block diagram of an information processing apparatus.
Fig. 3 is a block diagram of a reception apparatus.
Fig. 4 is a schematic diagram illustrating an example of an ID card creation screen displayed on a touch panel display.
Fig. 5 is a description diagram for describing an example of registration processing performed by a registration unit.
Fig. 6 is a description diagram for describing an example of an aspect of estimating a personal relationship among a plurality of participants captured in the same image.
Fig. 7 is a description diagram for describing another example of the aspect of estimating the personal relationship among the plurality of participants captured in the same image.
Fig. 8 is a description diagram for describing another example of the aspect of estimating the personal relationship among the plurality of participants captured in the same image.
Fig. 9 is a schematic diagram for describing an example of an aspect of compositing an image and an ID code with a template image.
Fig. 10 is a schematic diagram illustrating an example of a printing screen displayed on the touch panel display.
Fig. 11 is a block diagram of a POS terminal.
Fig. 12 is a description diagram for describing an example of behavior information collection processing performed by a behavior information collection unit.
Fig. 13 is a block diagram of a viewing apparatus.
Fig. 14 is a description diagram for describing an example of counting processing performed by a counting unit.
Fig. 15 is a flowchart illustrating an example of a flow of the registration processing.
Fig. 16 is a flowchart illustrating an example of a flow of the behavior information collection processing.
Fig. 17 is a flowchart illustrating an example of a flow of the counting processing.
Fig. 18 is a schematic diagram illustrating an example of an aspect of displaying, on a display, a counting result obtained by counting, for each store, the number of participants who have visited for shopping.
Fig. 19 is a schematic diagram illustrating an example of an aspect of displaying, on the display, a counting result obtained by counting, for each store, a ratio of the number of people based on a breakdown of attributes of the participants who have visited for shopping.
Fig. 20 is a schematic diagram illustrating an example of participant data in which a purchase time point, a product name, a quantity, and a unit price of a product are collected as behavior information.
Fig. 21 is a schematic diagram illustrating an example of an aspect of scanning the ID code printed on an ID card via a smart device.
Fig. 22 is a description diagram for describing an example of an aspect of transmitting a viewing screen to the smart device via the counting unit in response to a viewing request transmitted from the smart device.
Fig. 23 is a schematic diagram illustrating an example of an aspect of estimating an attribute based on a video image included in a registration request.
Fig. 24 is a schematic diagram illustrating an example of an aspect of installing an operation program stored in a storage medium on a computer.

### DESCRIPTION OF THE PREFERRED EMBODIMENTS

### [First Embodiment]

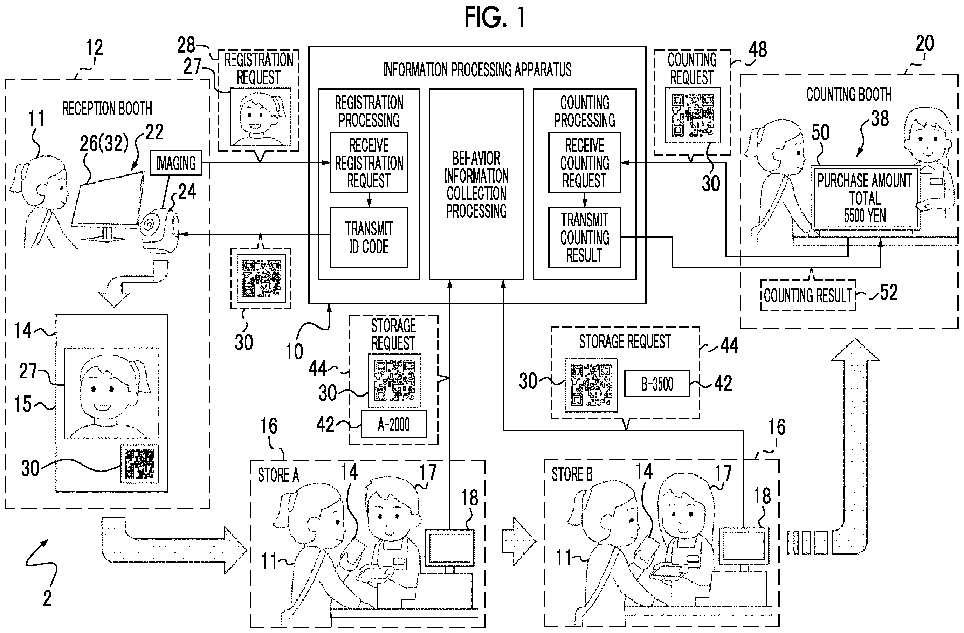

As illustrated in Fig. 1 as an example, an information management system 2 includes a reception apparatus 22 including a digital camera including a printer 24, and an information processing apparatus 10 communicably connected to the reception apparatus 22. For example, the information management system 2 is used in a shopping mall tenanted by a plurality of stores 16 including a store A and a store B, and is used for, as an example, information management of a shopping event held for shoppers in the shopping mall. The information management system 2 is an example of an "information management system" according to an embodiment of the disclosed technology. The reception apparatus 22 is an example of a "reception apparatus" according to the embodiment of the disclosed technology. The information processing apparatus 10 is an example of an "information processing apparatus" according to the embodiment of the disclosed technology.

In the shopping event, a participant 11 first receives an ID card 14 on which an image 27 showing a face of the participant 11 is printed, by imaging the face of the participant 11 via the reception apparatus 22 disposed in a reception booth 12. The participant 11 carries the ID card 14 and shops in the shopping mall. At each time of checking out at the stores 16 in the shopping mall, a purchase amount for each participant 11 is collected in the information processing apparatus 10 through a point of sale (POS) terminal 18 of each store 16 by operation of a cashier 17 in a case where the participant 11 presents the ID card 14 to the cashier 17 of each store 16. After shopping ends, the participant 11 stops by a counting booth 20. At the counting booth 20, the participant 11 can receive a special gift, for example, an item, a gift certificate, or a cashback, corresponding to a total purchase amount at the stores 16. The shopping event is an example of an "event" according to the embodiment of the disclosed technology, and the participant 11 is an example of a "participant" according to the embodiment of the disclosed technology. The ID card 14 is an example of a "card" according to the embodiment of the disclosed technology.

The information processing apparatus 10 is communicably connected to the reception apparatus 22 disposed in the reception booth 12, to the POS terminal 18 disposed in each store 16, and to a viewing apparatus 38 disposed in the counting booth 20 through a communication network such as a local area network (LAN). The information processing apparatus 10 performs registration processing, behavior information collection processing, and counting processing by exchanging various types of information with the reception apparatus 22, the POS terminal 18, and the viewing apparatus 38.

The registration processing is processing performed in response to a registration request 28 transmitted from the reception apparatus 22. The reception apparatus 22 includes the digital camera including a printer 24, a touch panel display 26, and a speaker 32 incorporated in the touch panel display 26. The digital camera including a printer 24 has a camera function of imaging the face of the participant 11 and a printing function of printing the image 27 acquired by imaging. For example, the digital camera including a printer 24 is an instant camera that can immediately print a captured image.

The touch panel display 26 and the speaker 32 provide guidance of a creation method of the ID card 14 to the participant 11 of the event who has visited the reception booth 12, through a video and voice. In a case where the participant 11 operates the touch panel display 26 in accordance with the creation method of the ID card 14, the digital camera including a printer 24 acquires the image 27 by imaging the face of the participant 11. The reception apparatus 22 transmits the registration request 28 including the image 27 acquired by the digital camera including a printer 24 to the information processing apparatus 10.

In the registration processing, the information processing apparatus 10 receives the registration request 28. An ID code 30 is created for each registration request 28, and the created ID code 30 is transmitted to the reception apparatus 22. The reception apparatus 22 receives the ID code 30 from the information processing apparatus 10. The image 27 and the received ID code 30 are printed on an instant film 15 by the digital camera including a printer 24. Accordingly, the digital camera including a printer 24 outputs the ID card 14 on which the image 27 and the ID code 30 are printed. The image 27 is an example of an "image" according to the embodiment of the disclosed technology. The ID code 30 is an example of a "two-dimensional code" according to the embodiment of the disclosed technology. The instant film 15 is an example of an "instant film" according to the embodiment of the disclosed technology.

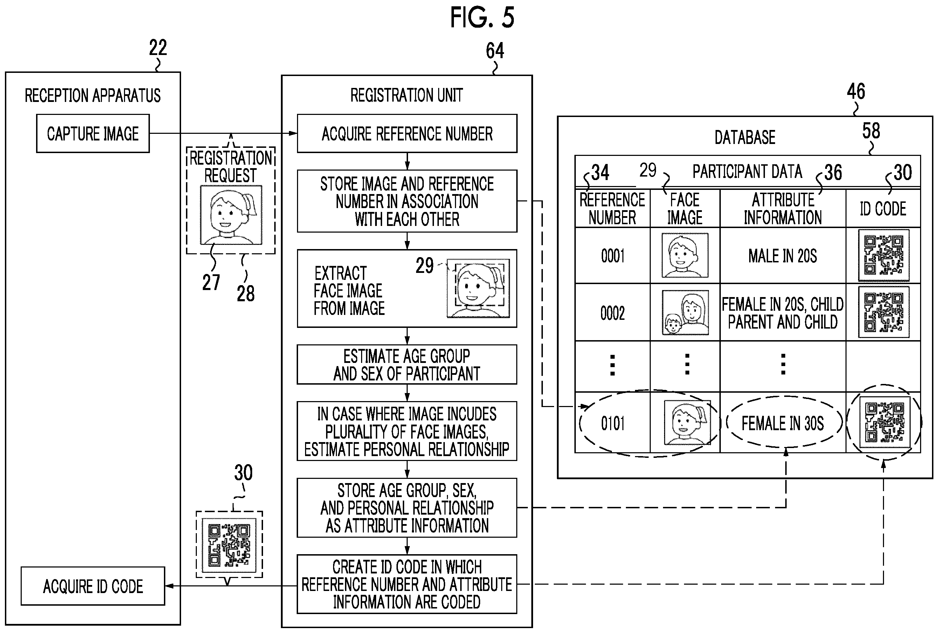

While details will be described later, the ID code 30 is a two-dimensional code created based on the image 27 obtained by imaging the face of the participant 11. The ID code 30 includes a reference number 34 (refer to Fig. 5) assigned for each participant 11. While a QR code (registered trademark) is employed as the ID code 30 in the example illustrated in Fig. 1, the disclosed technology is not limited thereto. Other types of two-dimensional codes such as a micro QR code (registered trademark) or Data Matrix may be employed as the ID code 30.

The ID card 14 is a card provided to the participant 11 participating in the shopping event and is a card to be carried by the participant 11 during shopping in the shopping mall. The ID card 14 is created for each participant 11. The participant 11 associated with one ID card 14, that is, the participant 11 captured in the image 27, may be one person or a plurality of people. The ID card 14 is used for collecting behavior information of the participant 11.

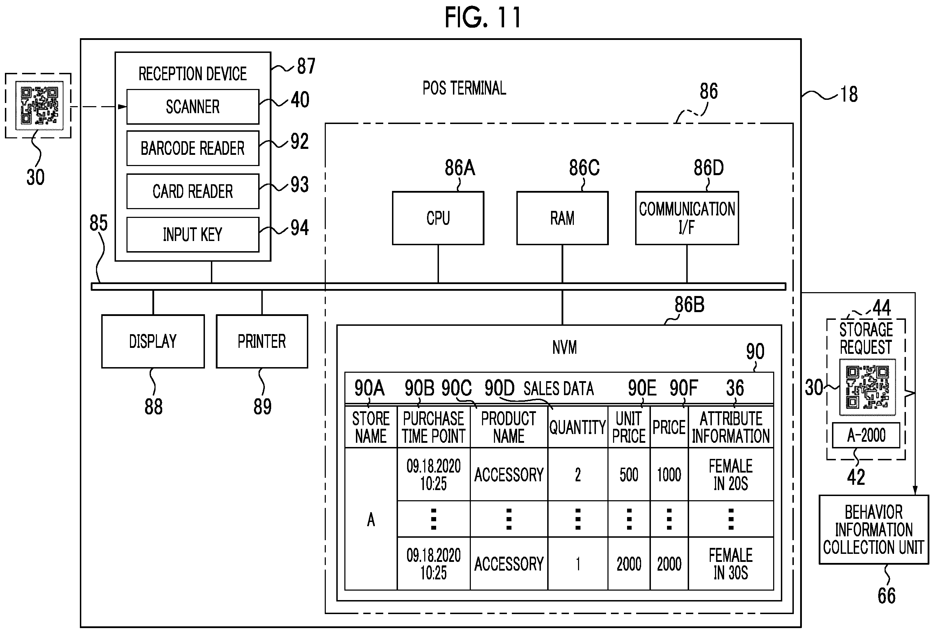

The behavior information collection processing is processing performed in response to a storage request 44 transmitted from the POS terminal 18 disposed in each store 16. The POS terminal 18 is a cash register to which a scanner 40 (refer to Fig. 11), a barcode reader 92 (refer to Fig. 11), and the like are attached, and is communicably connected to a host computer (not illustrated) installed inside or outside the store 16. The host computer and the POS terminal 18 constitute a shopping information management system operated by the stores 16. The shopping information management system is a system that performs sales management, stock management, and the like of the stores 16 in real time.

In the behavior information collection processing, behavior information 42 indicating how much each participant 11 has shopped at which store 16 is collected. Specifically, in a case of checking out by registering information about a product to be purchased by the participant 11 in the POS terminal 18, the cashier 17 of each store 16 scans the ID code 30 printed on the ID card 14 presented from the participant 11 via the scanner 40 of the POS terminal 18.

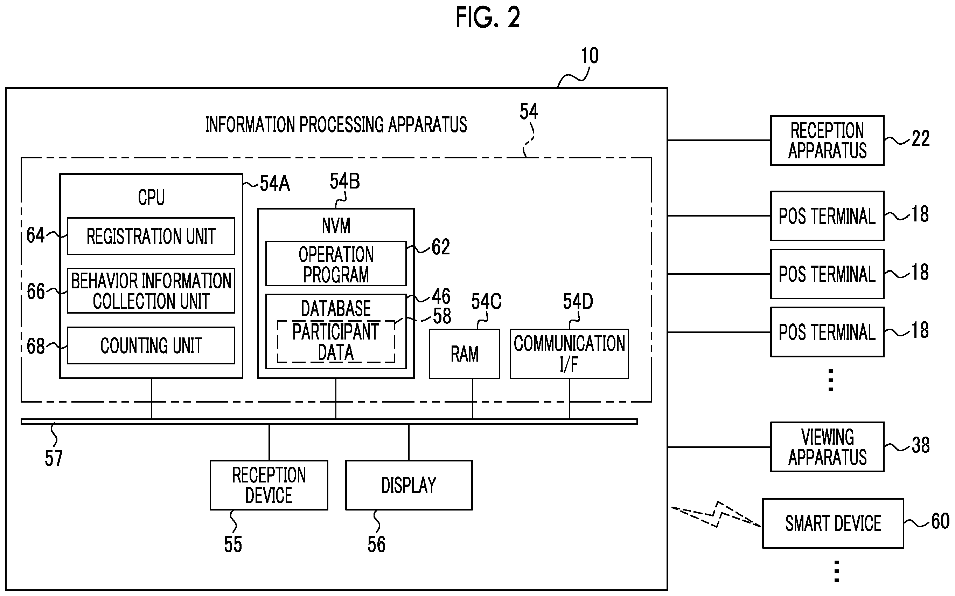

The POS terminal 18 transmit the storage request 44 including the scanned ID code 30 and the behavior information 42 to the information processing apparatus 10. The behavior information 42 is information including a store name and the purchase amount of the participant 11. In the example illustrated in Fig. 1, in a case where the participant 11 has purchased a product of 2000 yen at the store A, "A-2000" including information about the store name "A" and about the purchase amount "2000 yen" is included in the storage request 44 as the behavior information 42. Similarly, the storage request 44 transmitted from the store B includes the behavior information 42 of "B-3500" indicating that the purchase amount of the participant 11 at the store B is 3500 yen. In the behavior information collection processing, the information processing apparatus 10 receives the storage request 44 from each store 16 and acquires the reference number 34 from the ID code 30 included in the received storage request 44. The information processing apparatus 10 stores the acquired reference number 34 and the behavior information 42 in a database 46 (refer to Fig. 2) in association with each other.

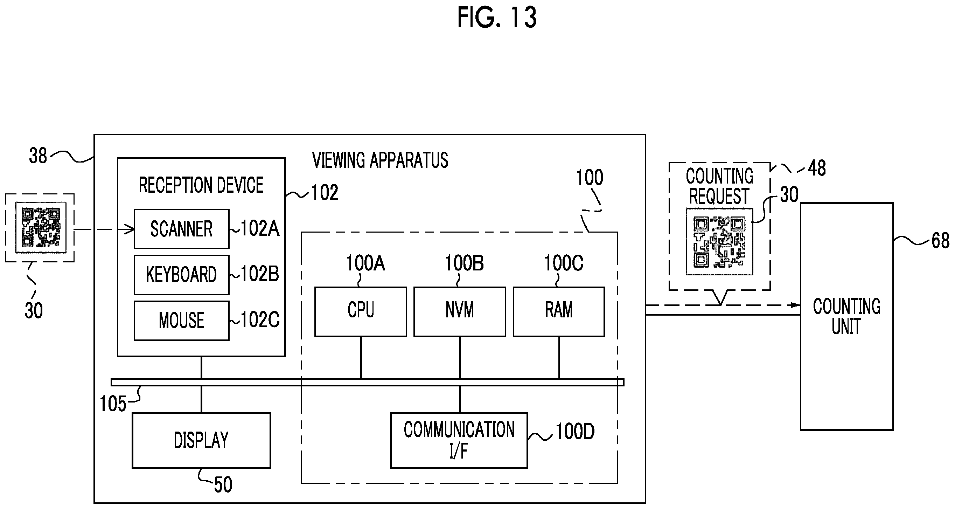

The counting processing is processing performed in response to a counting request 48 transmitted from the viewing apparatus 38 disposed in the counting booth 20. The viewing apparatus 38 scans the ID code 30 via a scanner 102A (refer to Fig. 13) and transmits the counting request 48 including the scanned ID code 30 to the information processing apparatus 10. The information processing apparatus 10 receives the counting request 48 and acquires the reference number 34 from the ID code 30 included in the received counting request 48. The information processing apparatus 10 reads out the behavior information 42 corresponding to the acquired reference number 34 from the database 46. The information processing apparatus 10 counts the purchase amount included in the read-out behavior information 42 and transmits a counting result 52 to the viewing apparatus 38. The viewing apparatus 38 receives the counting result 52 and displays the received counting result 52 on a display 50. The counting result 52 is an example of a "counting result" according to the embodiment of the disclosed technology.

As illustrated in Fig. 2 as an example, the information processing apparatus 10 comprises a computer 54, a reception device 55, and a display 56. The computer 54 includes a central processing unit (CPU) 54A, a non-volatile memory (NVM) 54B, a random access memory (RAM) 54C, and a communication interface (I/F) 54D. The CPU 54A, the NVM 54B, the RAM 54C, the communication I/F 54D, the reception device 55, and the display 56 are connected to each other through a bus 57.

The CPU 54A controls the entire information processing apparatus 10. The NVM 54B is a non-volatile memory. Here, an electrically erasable programmable read-only memory (EEPROM) and a solid state drive (SSD) are employed as an example of the NVM 54B. However, the disclosed technology is not limited thereto. Any of the SSD or the EEPROM may be employed, or a combination of a plurality of non-volatile memories other than the SSD and the EEPROM may be employed. The NVM 54B includes the database 46 that stores participant data 58 and the like related to the participant 11. The RAM 54C is a volatile memory. The RAM 54C is used by the CPU 54A as a work memory. The database 46 is an example of a "database" according to the embodiment of the disclosed technology.

The reception device 55 includes, for example, a keyboard, a touch panel, and a mouse. The reception device 55 receives an instruction from a user of the information processing apparatus 10. The instruction received by the reception device 55 is transmitted to the CPU 54A through the bus 57.

The display 56 is, for example, an organic electro-luminescence (EL) display. The display 56 displays the participant data 58 and the like collected in the database 46 under control of the CPU 54A. The display 56 is not limited to the organic EL display and may be an inorganic EL display, a liquid crystal display, or the like.

The communication I/F 54D is implemented by, for example, a device including a field-programmable gate array (FPGA). The communication I/F 54D is connected to the reception apparatus 22, to the POS terminal 18, and to the viewing apparatus 38 by wired or wireless communication and exchanges various types of information between the CPU 54A and the reception apparatus 22, the POS terminal 18, and the viewing apparatus 38. In addition, the communication I/F 54D is connected to a smart device 60 of the participant 11 through the Internet.

The NVM 54B stores an operation program 62. The CPU 54A operates as a registration unit 64, as a behavior information collection unit 66, and as a counting unit 68 by reading out the operation program 62 from the NVM 54B and by executing the read-out operation program 62 on the RAM 54C. The registration unit 64 performs the registration processing. The behavior information collection unit 66 performs the behavior information collection processing. The counting unit 68 performs the counting processing. The CPU 54A that functions as the registration unit 64, as the behavior information collection unit 66, and as the counting unit 68 is an example of a "processor" according to the embodiment of the disclosed technology.

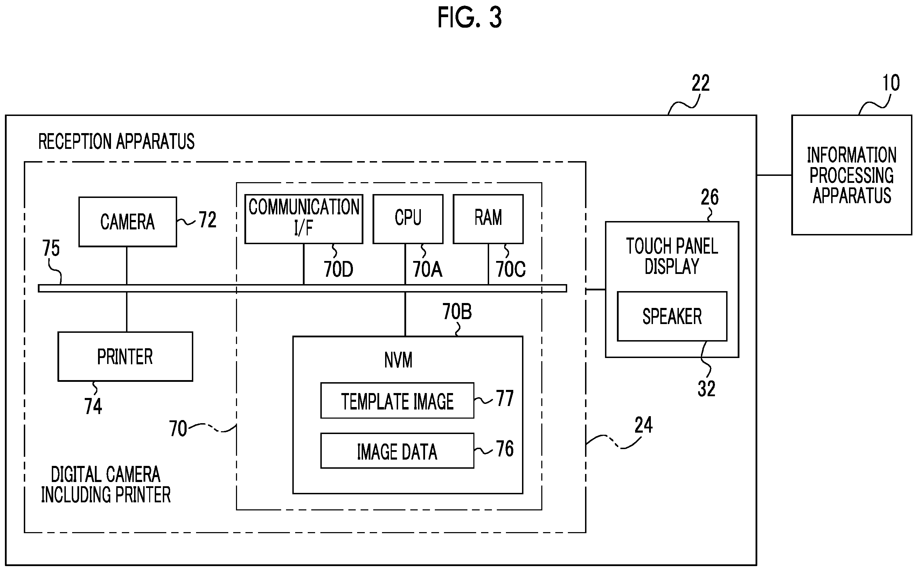

An example of the registration processing performed by the registration unit 64 will be specifically described below with reference to Fig. 3 to Fig. 10.

As illustrated in Fig. 3 as an example, the reception apparatus 22 comprises the digital camera including a printer 24, and the touch panel display 26 in which the speaker 32 is incorporated. The touch panel display 26 is connected to the digital camera including a printer 24 in a wired manner. The digital camera including a printer 24 comprises a computer 70, a camera 72 having the camera function, and a printer 74 having the printer function. The computer 70 includes a CPU 70A, an NVM 70B, a RAM 70C, and a communication I/F 70D. The CPU 70A, the NVM 70B, the RAM 70C, the communication I/F 70D, the camera 72, and the printer 74 are connected to each other through a bus 75.

The CPU 70A controls the entire reception apparatus 22. The NVM 70B is a non-volatile memory. Here, a flash memory is employed as an example of the NVM 70B. However, the disclosed technology is not limited thereto. A combination of a plurality of non-volatile memories may be employed. The NVM 70B stores a template image 77 that is a template for printing the ID card 14, and image data 76 related to an image captured by the camera 72. The RAM 70C is a volatile memory. The RAM 70C is used by the CPU 70A as a work memory. The communication I/F 70D exchanges various types of information between the CPU 70A and the touch panel display 26 and the information processing apparatus 10.

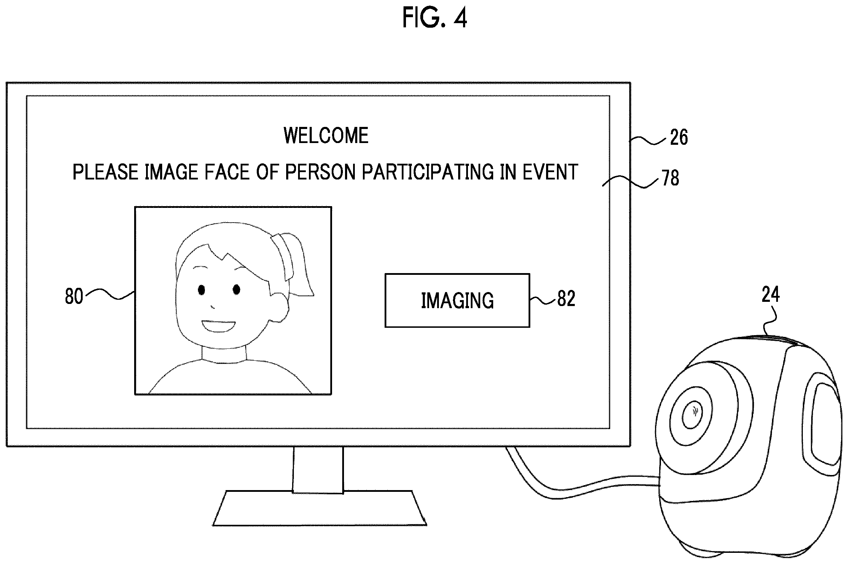

As illustrated in Fig. 4 as an example, the CPU 70A creates an ID card creation screen 78 and displays the created ID card creation screen 78 on the touch panel display 26. A message that prompts the participant 11 to image the face is displayed in an upper portion of the ID card creation screen 78. A window 80 and an imaging button 82 are displayed at a center of the ID card creation screen 78. The CPU 70A acquires a live view image by operating the camera 72 and displays the acquired live view image in the window 80. In addition, the CPU 70A outputs, from the speaker 32, a guide voice that prompts the participant 11 to image the face.

The participant 11 adjusts a position of the face so that the face of the participant 11 fits in the window 80, and touches the imaging button 82. In a case where the imaging button 82 is touched by the participant 11, the CPU 70A acquires a still image of one frame captured by the camera 72 at a timing of the touch as the image 27 of the participant 11. The CPU 70A stores the acquired image 27 in the NVM 70B as the image data 76. In addition, the CPU 70A creates the registration request 28 including the acquired image 27 and transmits the created registration request 28 to the registration unit 64.

As illustrated in Fig. 5 as an example, in a case where the registration request 28 including the image 27 is received from the reception apparatus 22, the registration unit 64 acquires the reference number 34. The reference number 34 is an identification number of the participant 11 assigned for each participant 11 in order of registration of the participant 11. In the present example, a four-digit number "0101" is the reference number 34 assigned to the participant 11. The registration unit 64 stores the image 27 included in the registration request 28 and the acquired reference number 34 in the participant data 58 of the database 46 in association with each other. The reference number 34 is an example of "identification information" according to the embodiment of the disclosed technology.

The registration unit 64 extracts a face image 29 showing a face of a person from the image 27 using a well-known face recognition technology. For example, a known face recognition technology such as a method of performing contour extraction and/or pattern matching by performing processing such as edge detection on the image 27, and a method using machine learning can be used as an extraction method of the face image 29.

The registration unit 64 estimates an age group and a sex of the participant 11 by performing image analysis on the extracted face image 29. For example, a known age and sex determination technology such as a method of extracting a feature amount of a face from the face image 29 and of performing pattern matching based on the extracted feature amount, and a method using machine learning can be used as a technique of the image analysis for estimating the age group and the sex. For example, in the method of performing pattern matching, a database in which a correspondence relationship between feature amounts of faces extracted from a plurality of photos and age groups and sexes is prepared in advance. The registration unit 64 compares the feature amount of the face extracted from the face image 29 with a feature amount of a face read out from the database. Based on a comparison result, the registration unit 64 reads out, from the database, an age group and a sex corresponding to a feature amount of which similarity to the feature amount of the face extracted from the face image 29 is high, and estimates the age group and the sex read out from the database as an age group and a sex of the face extracted from the face image 29. In the example illustrated in Fig. 5, the age group of the participant 11 is estimated as "in 30s", and the sex of the participant 11 is estimated as "female" based on the face image 29 extracted from the image 27.

In addition, in a case where a plurality of the face images 29 are extracted from the image 27, that is, in a case where a plurality of the participants 11 are captured in the image 27, the registration unit 64 estimates the age group and the sex of each participant 11. In a case where the plurality of participants 11 are captured in the image 27, the registration unit 64 estimates a personal relationship among the plurality of participants 11 based on the estimated age group and sex of each participant 11. Hereinafter, an example of a method of estimating the personal relationship among the plurality of participants 11 will be described.

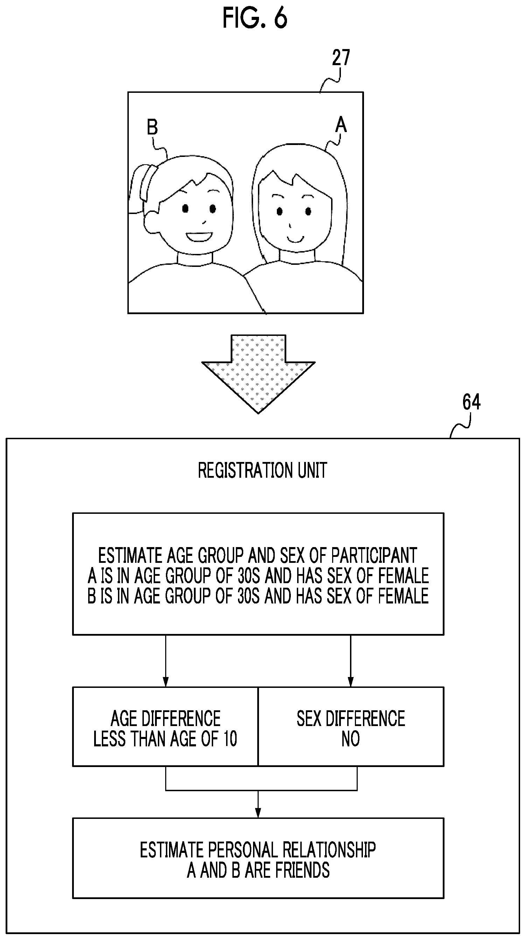

As illustrated in Fig. 6 as an example, the registration unit 64 derives an age difference and a sex difference among the plurality of participants 11 based on the estimated age groups and sexes of the plurality of participants 11. In a case where the plurality of participants 11 have an age difference less than an age of 10 and have the same sex, the registration unit 64 estimates that the plurality of participants 11 are in a relationship of friends. In the example illustrated in Fig. 6, since a participant A and a participant B captured in the image 27 have an age difference less than an age of 10 and have the same sex, the registration unit 64 estimates that the participant A and the participant B are in a relationship of friends.

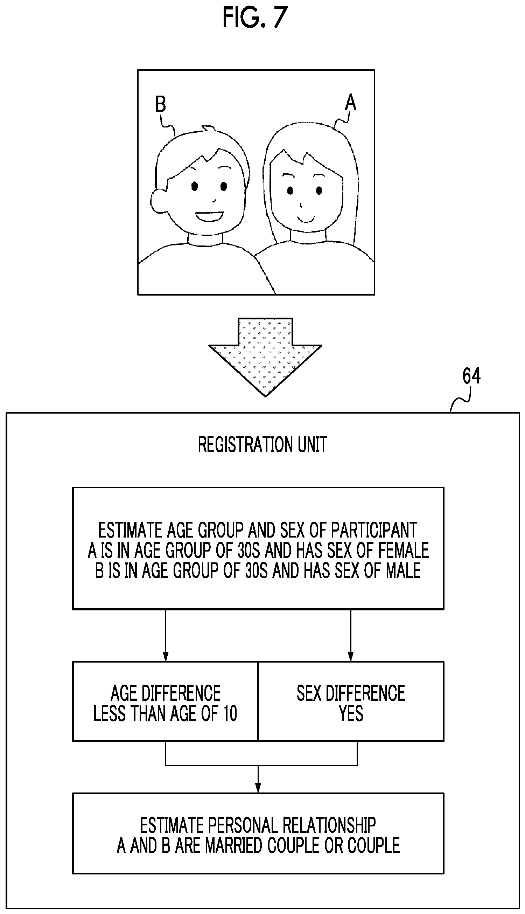

As illustrated in Fig. 7 as an example, in a case where the plurality of participants 11 have an age difference less than an age of 10 and have different sexes, the registration unit 64 estimates that the plurality of participants 11 are in a relationship of a married couple or of a couple. In the example illustrated in Fig. 7, since the participant A and the participant B captured in the image 27 have an age difference less than an age of 10 and have different sexes, the registration unit 64 estimates that the participant A and the participant B are in a relationship of a married couple or of a couple.

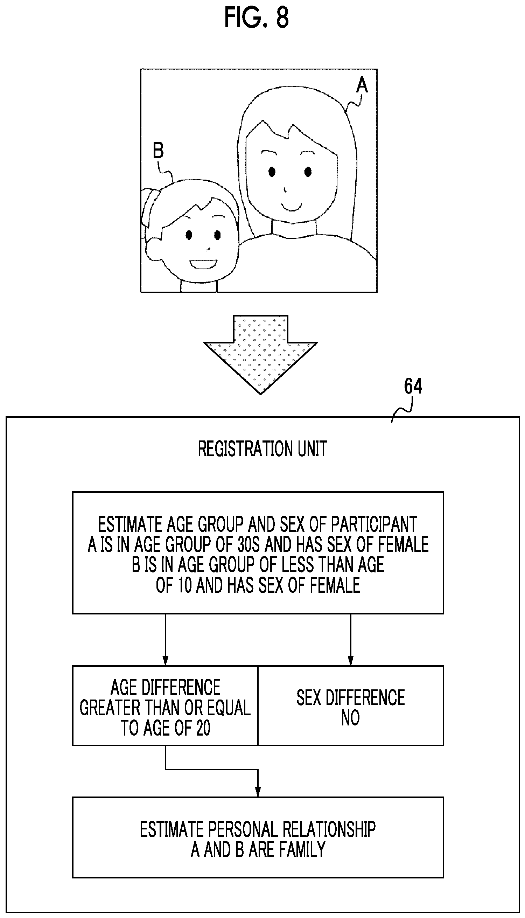

As illustrated in Fig. 8 as an example, in a case where the plurality of participants 11 have an age difference greater than or equal to an age of 20, the registration unit 64 estimates that the plurality of participants 11 are in a family relationship. In the example illustrated in Fig. 8, since the participant A and the participant B captured in the image 27 have an age difference greater than or equal to an age of 20, the registration unit 64 estimates that the participant A and the participant B are in a family relationship.

Various conditions such as a combination of the age difference and the sex difference used for estimating the personal relationship as illustrated in Fig. 6 to Fig. 8 are stored in, for example, the NVM 54B. The registration unit 64 estimates the personal relationship with reference to the conditions.

As illustrated in Fig. 5, the registration unit 64 stores the estimated age group, sex, and personal relationship of the participant 11 in the participant data 58 of the database 46 as attribute information 36 in association with the reference number 34 and with the image 27. The age group is an example of an "age" according to the embodiment of the disclosed technology.

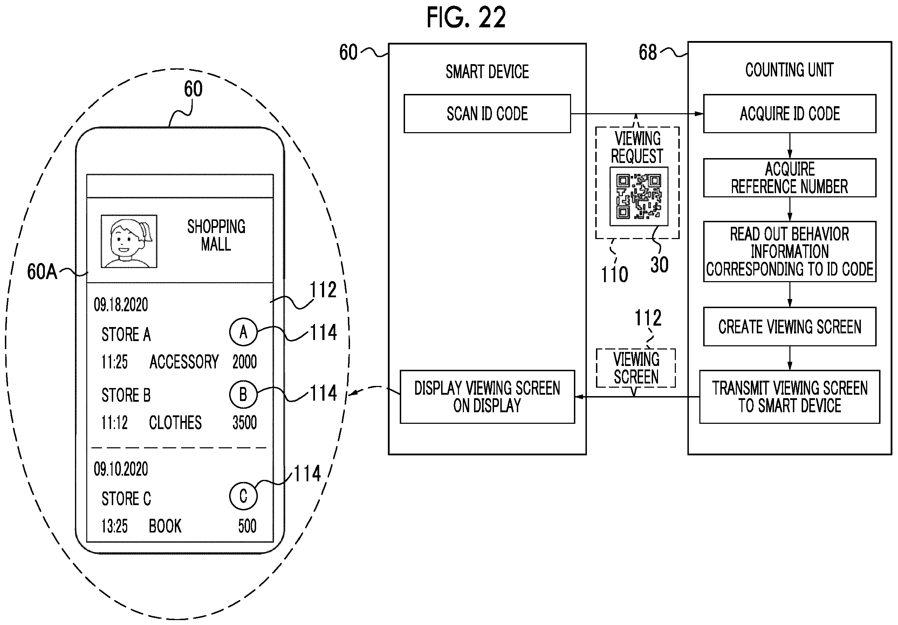

The registration unit 64 creates the ID code 30 in which the reference number 34 and the attribute information 36 are two-dimensionally coded, and transmits the created ID code 30 to the reception apparatus 22. In addition, the registration unit 64 stores the created ID code 30 in the participant data 58 of the database 46 in association with the reference number 34, with the image 27, and with the attribute information 36. The ID code 30 includes, in addition to the reference number 34 and to the attribute information 36, a uniform resource locator (URL) or the like for referring to a viewing screen 112 (refer to Fig. 22), described later, in a coded form.

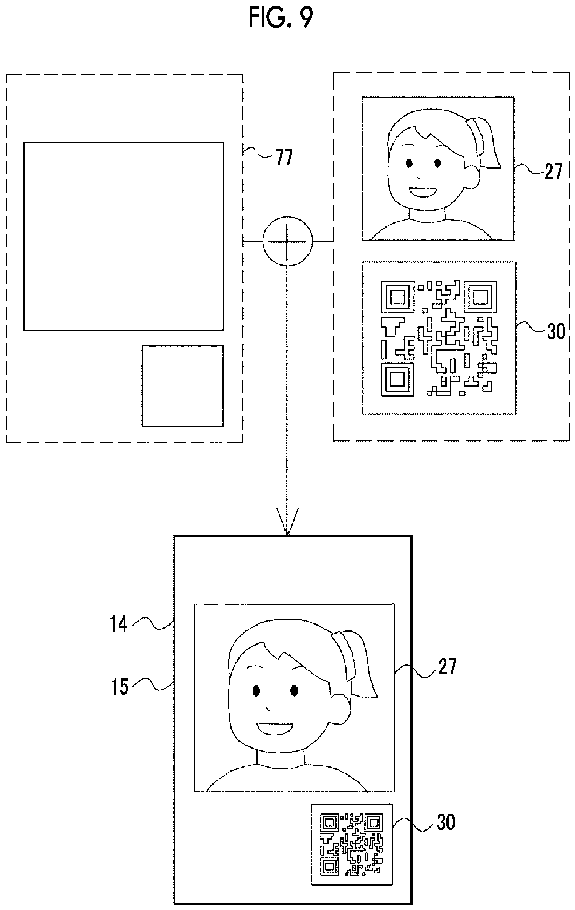

The reception apparatus 22 receives the ID code 30 from the registration unit 64. As illustrated in Fig. 9 as an example, the CPU 70A of the reception apparatus 22 prints a composite image in which the image 27 acquired by the camera 72 and the received ID code 30 are composited with the template image 77, on one instant film 15 via the printer 74. Accordingly, the ID card 14 is output from the printer 74.

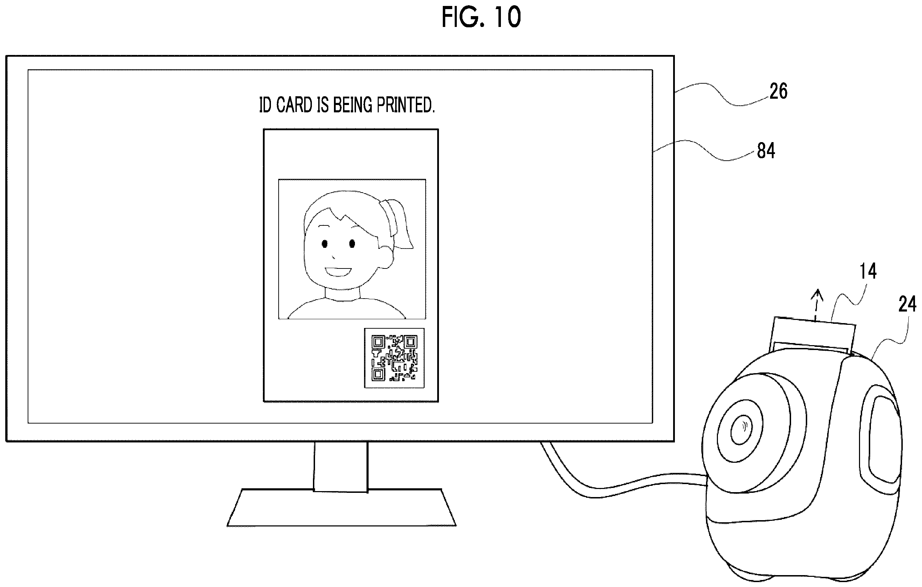

As illustrated in Fig. 10 as an example, while the printer 74 prints the ID card 14, the CPU 70A generates a printing screen 84 indicating that the ID card 14 is being printed, and displays the generated printing screen 84 on the touch panel display 26. The printed ID card 14 is discharged to an outside from a slit provided in an upper portion of the digital camera including a printer 24.

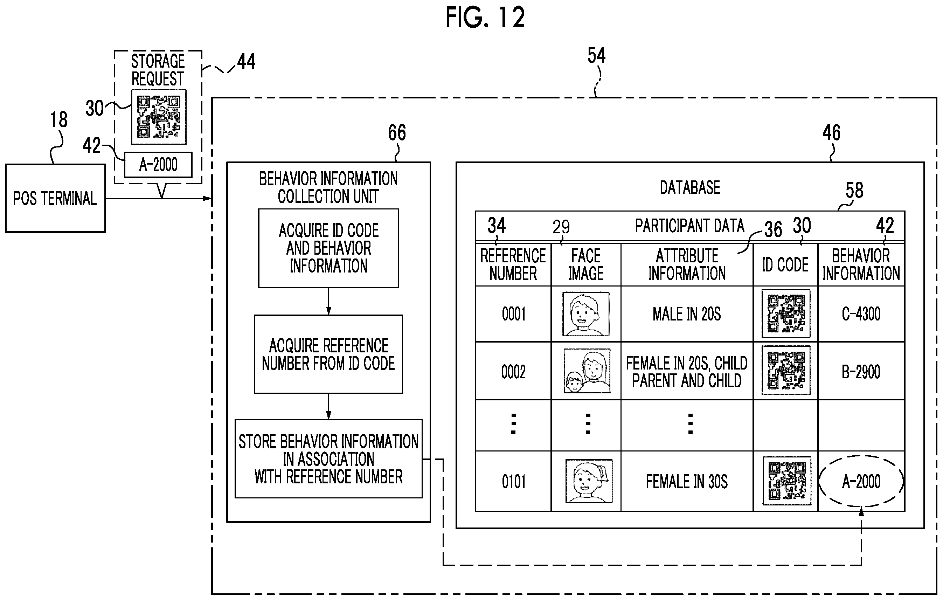

An example of the behavior information collection processing performed by the behavior information collection unit 66 will be specifically described below with reference to Fig. 11 and Fig. 12.

As illustrated in Fig. 11 as an example, the POS terminal 18 includes a computer 86, a reception device 87, a display 88, and a printer 89. The computer 86 includes a CPU 86A, an NVM 86B, a RAM 86C, and a communication I/F 86D. The CPU 86A, the NVM 86B, the RAM 86C, the communication I/F 86D, the reception device 87, the display 88, and the printer 89 are connected to each other through a bus 85.

The CPU 86A controls the entire POS terminal 18. The NVM 86B is a non-volatile memory. Here, an EEPROM and an SSD are employed as an example of the NVM 86B. However, the disclosed technology is not limited thereto. Any of the SSD or the EEPROM may be employed, or a combination of a plurality of non-volatile memories other than the SSD and the EEPROM may be employed. The NVM 86B stores sales data 90 in addition to various programs. The RAM 86C is a volatile memory. The RAM 86C is used by the CPU 86A as a work memory. The communication I/F 86D exchanges various types of information between the CPU 86A and the behavior information collection unit 66.

The reception device 87 includes the scanner 40, the barcode reader 92, a card reader 93, and an input key 94. The scanner 40 scans the ID code 30 printed on the ID card 14. The barcode reader 92 scans a barcode attached to each product in advance. The barcode includes information related to a product name, a price, and the like of each product. The card reader 93 scans an integrated circuit (IC) chip, a magnetic stripe, or the like included in a credit card of a shopper. The input key 94 includes a numeric keypad and enables information related to each product, information included in the credit card, and the like to be manually input into the POS terminal 18.

The display 88 is used for presenting a purchase amount to a shopper under control of the CPU 86A. The printer 89 prints a receipt showing content of shopping.

The CPU 86A calculates the purchase amount based on product information included in the barcode scanned by the barcode reader 92 and makes payment for the calculated purchase amount. In addition, the CPU 86A has a decoding function of acquiring the attribute information 36 included in the ID code 30 by decoding the ID code 30 scanned by the scanner 40.

The sales data 90 stores checkout content for each checkout. Specifically, the sales data 90 stores a store name 90A of the store 16 in which checkout is performed, a purchase time point 90B corresponding to a time point when checkout is performed, a product name 90C for each product, a quantity 90D, a unit price 90E, and a price 90F corresponding to the purchase amount. Furthermore, the sales data 90 stores the attribute information 36 of the participant 11 acquired by decoding the ID code 30 in association with the checkout content.

In a case where the participant 11, for example, shops at the store 16, the cashier 17 of the store 16 scans the barcode attached to the product to be purchased by the participant 11 via the barcode reader 92. The CPU 86A calculates the purchase amount based on the product information included in the barcode scanned by the barcode reader 92 and makes payment for the calculated purchase amount. The CPU 86A stores the checkout content in the NVM 86B as the sales data 90.

The participant 11 presents the ID card 14 to the cashier 17 at checkout in the store 16. The cashier 17 scans the ID code 30 printed on the ID card 14 presented by the participant 11 via the scanner 40. The CPU 86A acquires the attribute information 36 from the ID code 30 scanned by the scanner 40. The CPU 86A stores the acquired attribute information 36 in the NVM 86B as the sales data 90 in association with the checkout content.

In addition, the CPU 86A generates the storage request 44 including the ID code 30 scanned by the scanner 40 and the behavior information 42 and transmits the generated storage request 44 to the behavior information collection unit 66. The behavior information 42 includes information related to the store name 90A and to the price 90F.

As illustrated in Fig. 12 as an example, the behavior information collection unit 66 receives the storage request 44 from the POS terminal 18 and acquires the ID code 30 and the behavior information 42 included in the received storage request 44. The behavior information collection unit 66 acquires the reference number 34 included in the acquired ID code 30 and adds the acquired behavior information 42 to the participant data 58 in association with the acquired reference number 34.

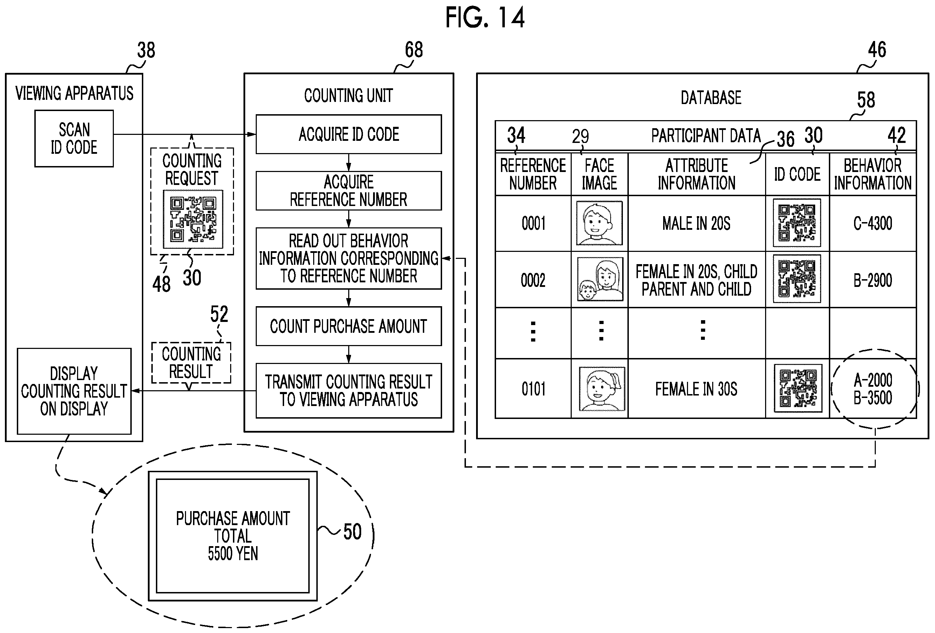

An example of the counting processing performed by the counting unit 68 will be specifically described below with reference to Fig. 13 and Fig. 14.

As illustrated in Fig. 13 as an example, the viewing apparatus 38 includes a computer 100, a reception device 102, and the display 50. The computer 100 includes a CPU 100A, an NVM 100B, a RAM 100C, and a communication I/F 100D. The CPU 100A, the NVM 100B, the RAM 100C, the communication I/F 100D, the reception device 102, and the display 50 are connected to each other through a bus 105.

The CPU 100A controls the entire viewing apparatus 38. The NVM 100B is a non-volatile memory. Here, a flash memory is employed as an example of the NVM 100B. However, the disclosed technology is not limited thereto. An EEPROM, an SSD, or the like may be employed, or a combination of a plurality of non-volatile memories may be employed. The RAM 100C is a volatile memory. The RAM 100C is used by the CPU 100A as a work memory. The communication I/F 100D exchanges various types of information between the CPU 100A and the counting unit 68.

The reception device 102 includes a scanner 102A, a keyboard 102B, and a mouse 102C. The scanner 102A scans the ID code 30 printed on the ID card 14. The keyboard 102B and the mouse 102C receive an instruction for the viewing apparatus 38 in accordance with an operation performed by staff present in the counting booth 20. The display 50 is used for displaying the counting result 52 transmitted from the counting unit 68 under control of the CPU 100A.

The participant 11 presents the ID card 14 to the staff in the counting booth 20. The staff scans the ID code 30 printed on the ID card 14 presented by the participant 11 via the scanner 102A. The CPU 100A generates the counting request 48 including the ID code 30 scanned by the scanner 102A and transmits the generated counting request 48 to the counting unit 68.

As illustrated in Fig. 14 as an example, the counting unit 68 receives the counting request 48 from the viewing apparatus 38 and acquires the ID code 30 included in the received counting request 48. The counting unit 68 acquires the reference number 34 included in the acquired ID code 30. The counting unit 68 searches for the behavior information 42 corresponding to the acquired reference number 34 in the participant data 58 and reads out the searched behavior information 42 from the database 46. The counting unit 68 counts the purchase amount based on the read-out behavior information 42. The counting unit 68 transmits the counted purchase amount to the viewing apparatus 38 as the counting result 52.

In the example illustrated in Fig. 14, the counting unit 68 reads out the behavior information 42 indicating "A-2000" and "B-3500" from the database 46 based on the ID code 30 included in the counting request 48. The counting unit 68 scans "2000 yen" and "3500 yen" that are the purchase amount from the behavior information 42 and transmits a total "5500 yen" of the purchase amount to the viewing apparatus 38 as the counting result 52. The viewing apparatus 38 receives the counting result 52 from the counting unit 68 and displays the received counting result 52 on the display 50.

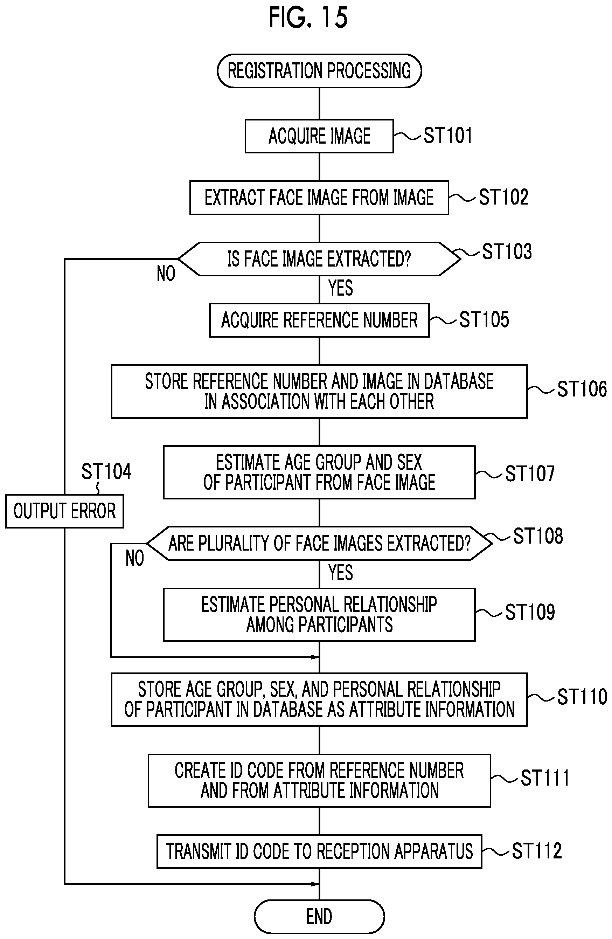

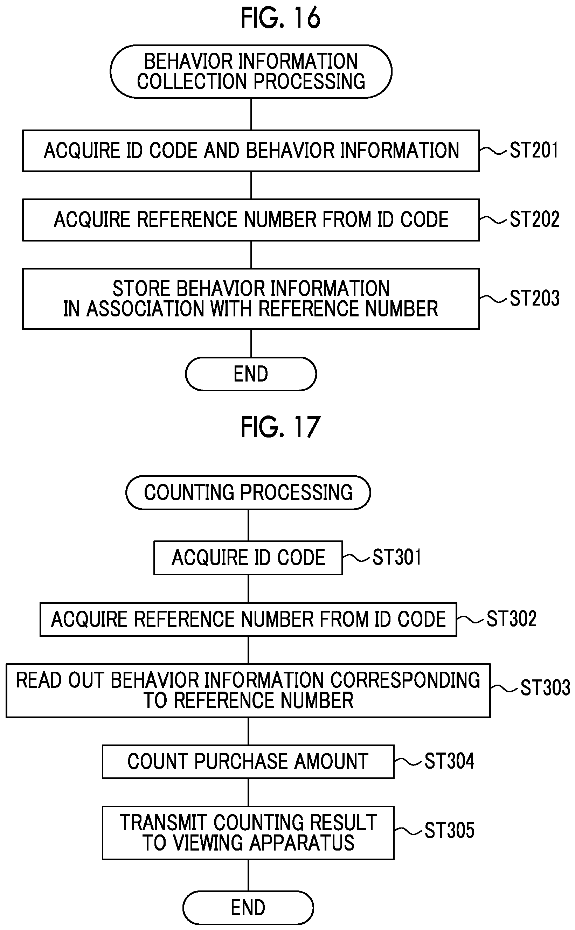

Next, an action of the information processing apparatus 10 according to the present embodiment will be described with reference to Fig. 15 to Fig. 17. The registration processing illustrated in Fig. 15, the behavior information collection processing illustrated in Fig. 16, and the counting processing illustrated in Fig. 17 are implemented by causing the CPU 54A to execute the operation program 62.

The registration processing illustrated in Fig. 15 is started in a case where the registration unit 64 receives the registration request 28 from the reception apparatus 22. In the registration processing, first, as illustrated in step ST101, the registration unit 64 acquires the image 27 included in the received registration request 28. Then, the registration processing transitions to step ST102.

In step ST102, the registration unit 64 extracts the face image 29 from the acquired image 27. Then, the registration processing transitions to step ST103.

In step ST103, the registration unit 64 determines whether or not the face image 29 is extracted from the acquired image 27. In step ST103, in a case where the face image 29 is extracted, a positive determination is made, and the registration processing transitions to step ST105. In a case where the face image 29 is not extracted, a negative determination is made, and the registration processing transitions to step ST104.

In step ST104, the registration unit 64 outputs error indicating that the face image 29 is not extracted from the acquired image 27, and ends the registration processing.

In step ST105, the registration unit 64 acquires a new reference number 34 corresponding to the received registration request 28. Then, the registration processing transitions to step ST106.

In step ST106, the registration unit 64 stores the acquired reference number 34 and the image 27 in the database 46 in association with each other. Then, the registration processing transitions to step ST107.

In step ST107, the registration unit 64 estimates the age group and the sex of the participant 11 based on the extracted face image 29. In addition, in a case where a plurality of the extracted face images 29 are present, the registration unit 64 estimates the age group and the sex of each participant 11 based on each face image 29. Then, the registration processing transitions to step ST108.

In step ST108, the registration unit 64 determines whether or not the plurality of face images 29 are extracted from the image 27. In a case where the plurality of face images 29 are extracted from the image 27, a positive determination is made, and the registration processing transitions to step ST109. In a case where the plurality of face images 29 are not extracted from the image 27, a negative determination is made, and the registration processing transitions to step ST 110.

In step ST109, the registration unit 64 estimates the personal relationship among the participants 11 based on the age group and the sex of each participant 11 estimated based on each of the plurality of face images 29. Then, the registration processing transitions to step ST110.

In step ST110, the registration unit 64 stores the age group, the sex, and, in a case where the plurality of face images 29 are extracted, the personal relationship of the participant 11 in the database 46 as the attribute information 36. Then, the registration processing transitions to step ST111.

In step ST111, the registration unit 64 generates the ID code 30 in which the reference number 34 and the attribute information 36 are two-dimensionally coded. Then, the registration processing transitions to step ST112.

In step ST112, the registration unit 64 transmits the generated ID code 30 to the reception apparatus 22. The reception apparatus 22 receives the ID code 30 from the registration unit 64. The printer 74 is operated to print, on the instant film 15, the composite image in which the image 27 and the received ID code 30 are composited with the template image 77. Accordingly, the registration processing ends.

The behavior information collection processing illustrated in Fig. 16 is started in a case where the behavior information collection unit 66 receives the storage request 44 from the POS terminal 18. In the behavior information collection processing, first, as illustrated in step ST201, the behavior information collection unit 66 acquires the ID code 30 and the behavior information 42 included in the received storage request 44. Then, the behavior information collection processing transitions to step ST202.

In step ST202, the behavior information collection unit 66 acquires the reference number 34 from the acquired ID code 30. Then, the behavior information collection processing transitions to step ST203.

In step ST203, the behavior information collection unit 66 adds the acquired behavior information 42 to the participant data 58 in association with the acquired reference number 34. Accordingly, the behavior information collection processing ends.

The counting processing illustrated in Fig. 17 is started in a case where the counting unit 68 receives the counting request 48 from the viewing apparatus 38. In the counting processing, first, as illustrated in step ST301, the counting unit 68 acquires the ID code 30 included in the received counting request 48. Then, the counting processing transitions to step ST302.

In step ST302, the counting unit 68 acquires the reference number 34 included in the acquired ID code 30. Then, the counting processing transitions to step ST303.

In step ST303, the counting unit 68 searches for the behavior information 42 corresponding to the acquired reference number 34 in the participant data 58 stored in the database 46 and reads out the searched behavior information 42 from the database 46. Then, the counting processing transitions to step ST304.

In step ST304, the counting unit 68 counts the purchase amount included in the read-out behavior information 42. Then, the counting processing transitions to step ST305.

In step ST305, the counting unit 68 transmits the counting result 52 of the purchase amount to the viewing apparatus 38. The viewing apparatus 38 receives the counting result 52 of the purchase amount from the counting unit 68 and displays the received counting result 52 on the display 50. Accordingly, the counting processing ends.

As described so far, according to the present embodiment, the registration unit 64 acquires the image 27 of the participant 11 participating in the shopping event (an example of the event) and outputs the ID code 30 (an example of the two-dimensional code) in which the attribute information 36 indicating an attribute of the participant 11 estimated based on the image 27 and the reference number 34 (an example of the identification information) assigned for each participant 11 are coded. The ID code 30 includes the attribute information 36 of the participant 11. Thus, as an example, the ID code 30 can be used in the ID card 14 of the participant 11 in the event. The attribute information 36 is acquired based on the image 27. Thus, an input procedure of personal information by the participant 11 is not necessary. As described above, in a case where the ID card 14 on which the ID code 30 is recorded is carried by the participant 11 in the event, and the behavior information 42 is collected in addition to the ID code 30 including the attribute information 36 in shopping and the like at the store 16, the attribute information 36 (general attributes such as a sex, an age, and a family composition) of the participant 11 useful for an operation side of a customer-attracting facility can be collected. That is, it is possible to collect the attribute information 36 of the participant 11 useful for the operation side of the customer-attracting facility while reducing the input procedure of the personal information by the participant 11 participating in the event compared to the related art.

In addition, according to the present embodiment, the ID code 30 can be output to the printer 74. Accordingly, the printer 74 can print the ID card 14 on which the ID code 30 including the attribute information 36 is recorded. The reception apparatus 22 has a function of outputting the ID code 30 to the printer 74 and thus, can directly transmit the ID code 30 to the printer 74 without passing through a device such as a universal serial bus (USB) memory. Thus, the ID card 14 can be simply created.

In addition, according to the present embodiment, the image 27 can also be output to the printer 74 in addition to the ID code 30. Accordingly, since the image 27 of the participant 11 is printed on the ID card 14, the ID card 14 that pleases the participant 11 can be generated. In a case where a date and time when the event is held, a name of the customer-attracting facility that is a venue of the event, and the like are printed on a face surface of the ID card 14, the ID card 14 can also be a souvenir for the participant 11.

In addition, according to the present embodiment, the registration unit 64 stores the attribute information 36, the reference number 34, and the image 27 of the participant 11 in the database 46 as the participant data 58 in association with each other. Accordingly, the registration unit 64 can collect the attribute information 36, the reference number 34, and the image 27 of the participant 11 in association with each other. Such information is useful for information management of the participants of the event.

In addition, according to the present embodiment, the behavior information collection unit 66 receives the behavior information 42 of the participant 11 corresponding to the ID code 30 and stores the received behavior information 42 in the database 46 as the participant data 58 in association with the reference number 34 included in the ID code 30. Accordingly, the behavior information collection unit 66 can collect the behavior information 42 of the participant 11 in association with the attribute information 36 and the reference number 34 of the participant 11. Storing information, such as the behavior information 42 associated with the attribute information 36, useful for the customer-attracting facility in the database 46 facilitates behavior analysis and the like of the participant 11.

In addition, according to the present embodiment, for each reference number 34 included in the ID code 30, the counting unit 68 outputs the counting result 52 obtained by counting the behavior information 42 stored in the database 46. Referring to the counting result 52 facilitates the behavior analysis and the like for each participant 11 of the event for the operation side such as the customer-attracting facility of the event.

In addition, according to the present embodiment, the attribute information 36 includes the age group and the sex of the participant 11 estimated from the image 27. The age group and the sex of the participant 11 are necessary and sufficient information for performing the behavior analysis of the participant 11. By including the attribute information 36 in the information estimated from the image 27, information that is very useful for the operation side of the event can be simply acquired.

In addition, according to the present embodiment, in a case where the plurality of participants 11 are captured in the image 27, the attribute information 36 includes the personal relationship among the plurality of participants 11 estimated from the image 27. The personal relationship among the plurality of participants 11 is also useful information for perceiving tendencies of the participants 11 of the event. By including the attribute information 36 in the information estimated from the image 27, information that is very useful for the operation side of the event can be simply acquired.

In addition, according to the present embodiment, in the shopping event held in the shopping mall tenanted by the plurality of stores 16, the behavior information 42 includes the store name 90A at which the participant 11 has purchased the product, and the price 90F of the product. Thus, according to the present configuration, the counting unit 68 can collect shopping information of the participant 11 as the behavior information 42.

In addition, according to the present embodiment, the counting unit 68 acquires the behavior information 42 through the POS terminal 18 constituting the shopping management system operated by the stores 16. Thus, according to the present configuration, the counting unit 68 can collect the shopping information of the participant 11 as the behavior information 42 by using the existing shopping information management system.

In addition, according to the present embodiment, the registration unit 64 estimates the attribute information 36 of the participant 11 by performing the image analysis on the image 27. Thus, according to the present configuration, the attribute information 36 of the participant 11 is accurately estimated by using the image analysis, compared to a case where staff, for example, visually estimates the attribute information 36 of the participant 11. In addition, an image analysis apparatus separate from the information processing apparatus 10 does not need to be provided for acquiring the attribute information 36.

In addition, according to the present embodiment, the information management system 2 includes the reception apparatus 22 including the camera 72 and the printer 74, and the information processing apparatus 10 communicably connected to the reception apparatus 22. The camera 72 acquires the image 27 of the participant 11 participating in the shopping event. The registration unit 64 of the information processing apparatus 10 outputs, to the printer 74, the ID code 30 in which the attribute information 36 indicating the attribute of the participant 11 estimated based on the image 27 acquired using the camera 72 and the reference number 34 assigned for each participant 11 are coded. The printer 74 prints the image 27 and the ID code 30 on one ID card 14. Thus, according to the present configuration, as described above, it is possible to collect the attribute information 36 of the participant 11 useful for the operation side of the customer-attracting facility while reducing the input procedure of the personal information by the participant 11 participating in the event compared to the related art.

In addition, according to the present embodiment, the ID card 14 is the instant film 15 on which the image 27 and the ID code 30 are printed. Thus, according to the present configuration, since the instant film 15 can be instantly printed, the ID card 14 can be issued in a short time, and this provides convenience.

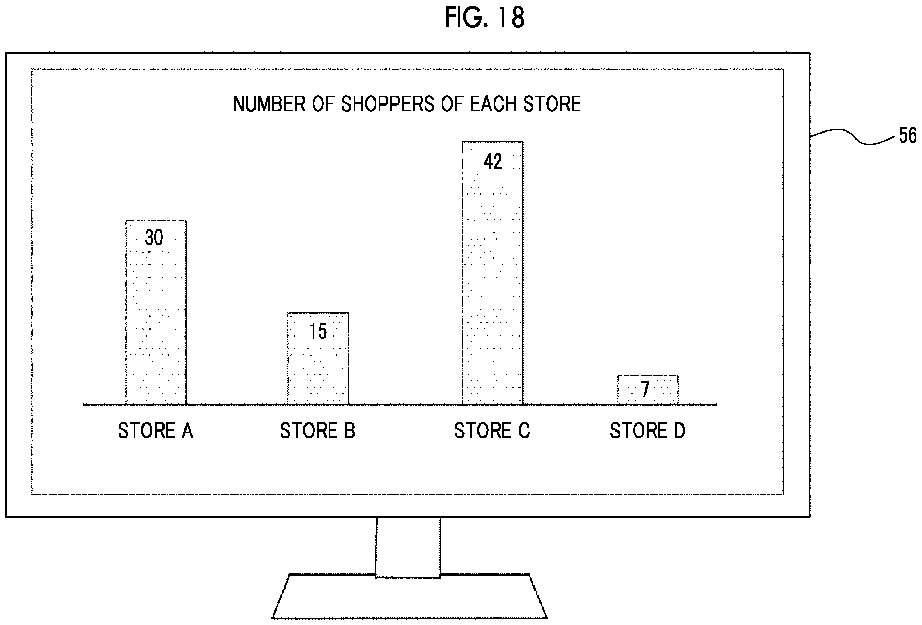

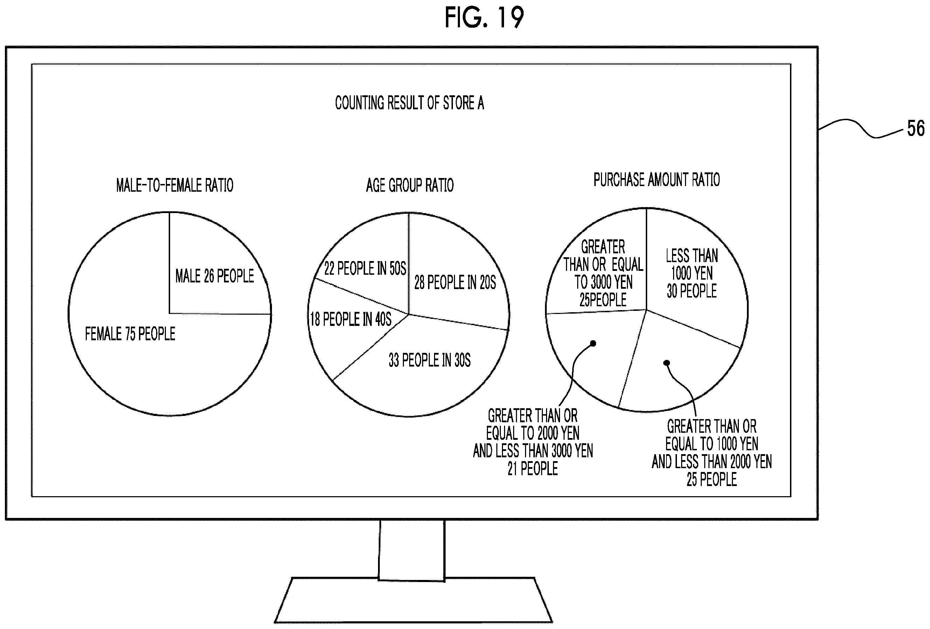

While an example of a form of transmitting the purchase amount for each participant 11 to the viewing apparatus 38 as the counting result 52 via the counting unit 68 in response to the counting request 48 received from the viewing apparatus 38 has been described in the embodiment, the disclosed technology is not limited thereto. As illustrated in Fig. 18 as an example, the counting unit 68 may count, for each store 16, the number of participants 11 who have visited for shopping, and display the counting result on the display 56 in response to a viewing request received from the reception device 55 of the information processing apparatus 10. In addition, as illustrated in Fig. 19 as an example, the counting unit 68 may count a ratio of the number of people, for example, a male-to-female ratio and an age group ratio, based on a breakdown of the attributes of the participants 11 who have visited for shopping, and a ratio of the number of people based on the purchase amount for each store 16 in response to the viewing request received from the reception device 55 of the information processing apparatus 10.

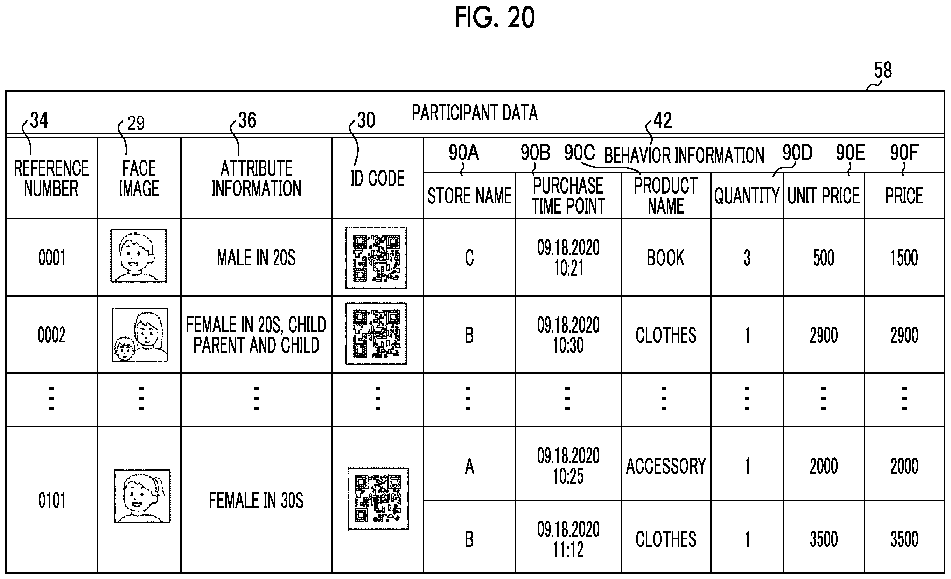

In addition, while an example of a form of collecting information including the store name 90A and the price 90F indicating the purchase amount of the participant 11 from the POS terminal 18 as the behavior information 42 via the behavior information collection unit 66 has been described in the embodiment, the disclosed technology is not limited thereto. As illustrated in Fig. 20 as an example, the behavior information collection unit 66 may collect, in addition to the store name 90A and the price 90F, the behavior information 42 including the purchase time point 90B, the product name 90C, the quantity 90D, and the unit price 90E from the POS terminal 18. The behavior information collection unit 66 stores the collected behavior information 42 in the database 46 as the participant data 58. Accordingly, behavior histories of all participants 11 are collected in the database 46 as the participant data 58. An operator of the shopping mall can use the collected behavior histories of the participants 11 for marketing such as selection of the store 16 to be tenanted in the shopping mall.

In addition, while an example of a form of counting the behavior information 42 stored in the database 46 and of transmitting the counting result 52 via the counting unit 68 in response to the counting request 48 received from the viewing apparatus 38 has been described in the embodiment, the disclosed technology is not limited thereto. For example, in a case where a viewing request including the ID code 30 is received from the smart device 60 possessed by each participant 11, the counting unit 68 may transmit the behavior information 42 stored in the database 46 in association with the reference number 34 included in the ID code 30 to the smart device 60 that is a request source.

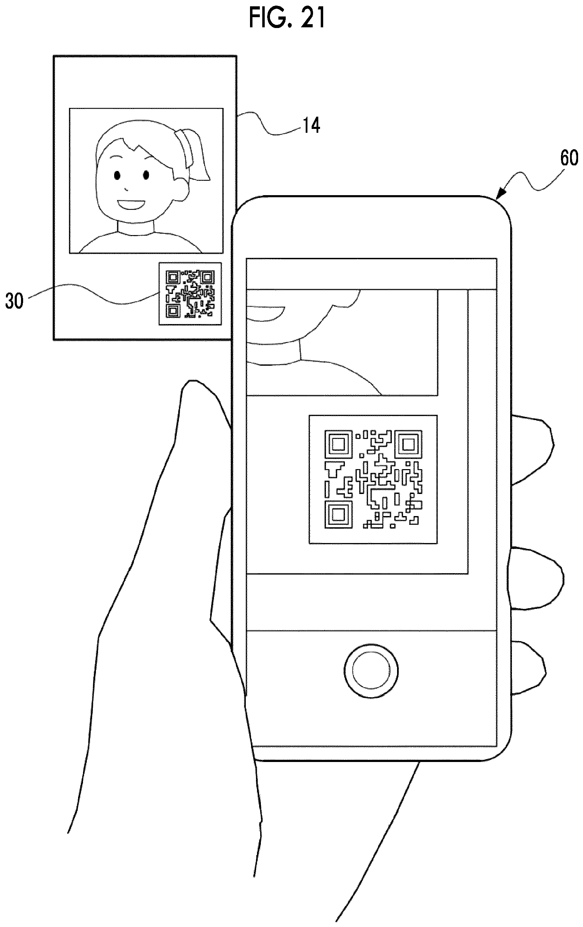

In this case, as illustrated in Fig. 21 as an example, the participant 11 images the ID code 30 printed on the ID card 14 using, for example, the camera function of the smart device 60 possessed by the participant 11. As illustrated in Fig. 22 as an example, the smart device 60 transmits a viewing request 110 including the imaged ID code 30 to the counting unit 68. In addition, the ID code 30 includes a predetermined URL, and the smart device 60 is connected to a site designated by the URL through an Internet browser. The viewing request 110 is an example of a "viewing request" according to the embodiment of the disclosed technology.

The counting unit 68 receives the viewing request 110 from the smart device 60 and acquires the ID code 30 included in the received viewing request 110. The counting unit 68 acquires the reference number 34 included in the acquired ID code 30. The counting unit 68 searches for the behavior information 42 corresponding to the acquired reference number 34 in the participant data 58 and reads out the searched behavior information 42 from the database 46. The counting unit 68 creates a viewing screen 112 based on the read-out behavior information 42 and transmits the created viewing screen 112 to the smart device 60 that is a request source of the viewing request 110. The smart device 60 receives the viewing screen 112 from the counting unit 68 and displays the received viewing screen 112 on a display 60A.

The behavior histories, that is, shopping histories, of the participants 11 in the shopping mall are displayed in time series on the viewing screen 112. In addition, a digital stamp 114 of each store 16 may be displayed on the viewing screen 112 in addition to the behavior information 42. According to the present configuration, the counting unit 68 can output the behavior history for each participant 11. In addition, the participant 11 can simply check a list of the behavior history of the participant 11.

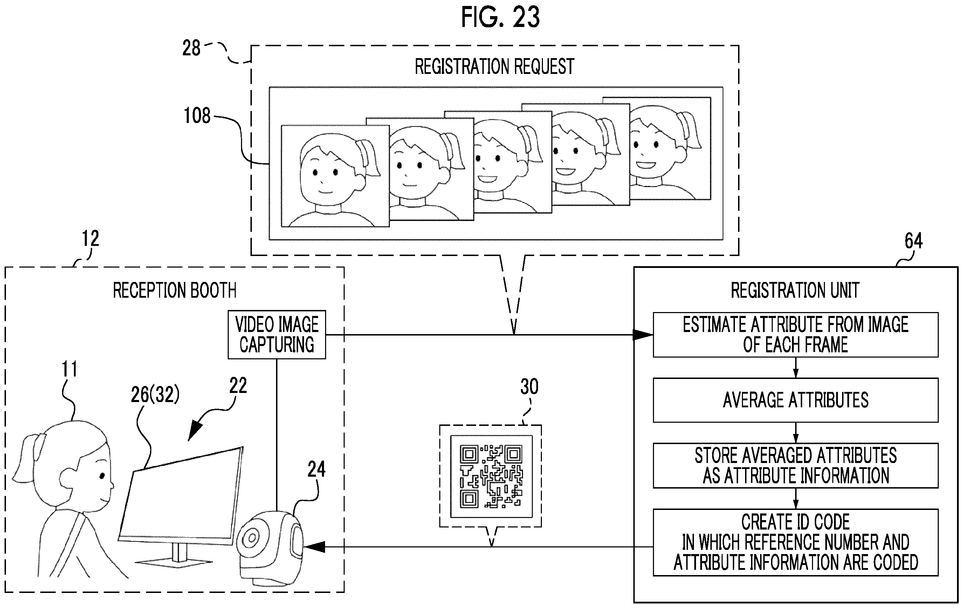

In addition, while an example of a form of transmitting the registration request 28 including the image 27 of one frame captured as a still image to the registration unit 64 via the reception apparatus 22 and of estimating the attribute information 36 of the participant 11 based on the image 27 of one frame included in the registration request 28 via the registration unit 64 has been described in the embodiment, the disclosed technology is not limited thereto. As illustrated in Fig. 23 as an example, the reception apparatus 22 may transmit the registration request 28 including a video image 108 acquired by performing video image capturing to the registration unit 64. While the video image capturing is performed by the digital camera including a printer 24 in the example illustrated in Fig. 23, the disclosed technology is not limited thereto. A video camera that captures the video image 108 may be installed in the reception apparatus 22 separately from the digital camera including a printer 24.

The registration unit 64 estimates the attribute of the participant 11 based on each of images of a plurality of frames included in the video image 108 and averages the estimated attributes. The registration unit 64 stores the averaged attributes in the database 46 as the attribute information 36 in association with the reference number 34. In addition, the registration unit 64 creates the ID code 30 in which the reference number 34 and the attribute information 36 are coded, and transmits the created ID code 30 to the reception apparatus 22. According to the present configuration, the registration unit 64 generates the attribute information 36 by averaging the attributes estimated from each of the images of the plurality of frames. Thus, estimation accuracy of the attribute information 36 is improved, compared to a case of using the attribute estimated from the image 27 of one frame as the attribute information 36.

In addition, while an example of a form of the reception apparatus 22 comprising the digital camera including a printer 24 including the camera 72 and the printer 74 has been described in the embodiment, the disclosed technology is not limited thereto. Instead of the digital camera including a printer 24, the reception apparatus 22 may use a digital camera not having the printer function or a smart device having the camera function.

In this case, the digital camera or the smart device transmits the captured image 27 to the registration unit 64. The registration unit 64 may create the composite image in which the image 27 and the ID code 30 are composited with the template image 77, and output the created composite image to an external printer. The external printer may output the ID card 14 by, for example, printing the composite image on a photo paper sheet.

In addition, the registration unit 64 may create the composite screen in which the image 27 and the ID code 30 are composited with the template image 77, and transmit the created composite screen to the smart device 60 carried by the participant 11. The smart device 60 displays the received composite screen on the display 60A as an electronic version of the ID card 14. According to the present configuration, consumables such as the instant film 15 or the photo paper sheet are not necessary. Furthermore, since the participant 11 can accumulate event information including the ID card 14 in the smart device 60, it is advantageous that the ID card 14 is unlikely to be lost, and that management of the event information is facilitated.

In addition, while an example of a form of estimating the attribute information 36 of the participant 11 via the registration unit 64 based on the image 27 including the face of the participant 11 has been described in the embodiment, the disclosed technology is not limited thereto. The registration unit 64 may estimate the attribute information 36 of the participant 11 based on an image obtained by capturing a full body image, a silhouette, clothes, or the like of the participant 11.

In addition, while an example of a form of storing the participant data 58 in the database 46 incorporated in the computer 54 of the information processing apparatus 10 has been described in the embodiment, the disclosed technology is not limited thereto. A database in which the participant data 58 is stored may be a server outside the information processing apparatus 10.

In addition, while an example of a form of using the information management system 2 in the shopping event held in the shopping mall has been described in the embodiment, the disclosed technology is not limited thereto. The information management system 2 can be applied to a commercial event such as an exhibition and an exhibition and sale, to an educational event such as a seminar and a workshop, to a traditional event such as a festival, to a cultural event such as a concert, to a sports event such as a marathon competition and the Olympics, and to other various types of events.

In addition, while the computers 54, 70, 86, and 100 have been illustrated in the embodiment, the disclosed technology is not limited thereto. For example, devices including an application specific integrated circuit (ASIC), an FPGA, and/or a programmable logic device (PLD) may be applied instead of the computer 54, 70, 86, or 100. In addition, a combination of a hardware configuration and a software configuration may be used instead of the computer 54, 70, 86, or 100.

In addition, while an example of a form of executing the registration processing, the behavior information collection processing, and the counting processing via the CPU 54A of the information processing apparatus 10 has been illustratively described in the embodiment, the disclosed technology is not limited thereto. Instead of the CPU 54A, a graphics processing unit (GPU) may be employed, or a plurality of CPUs may be employed. In addition, various types of processing may be executed by one processor or by a plurality of physically separated processors.

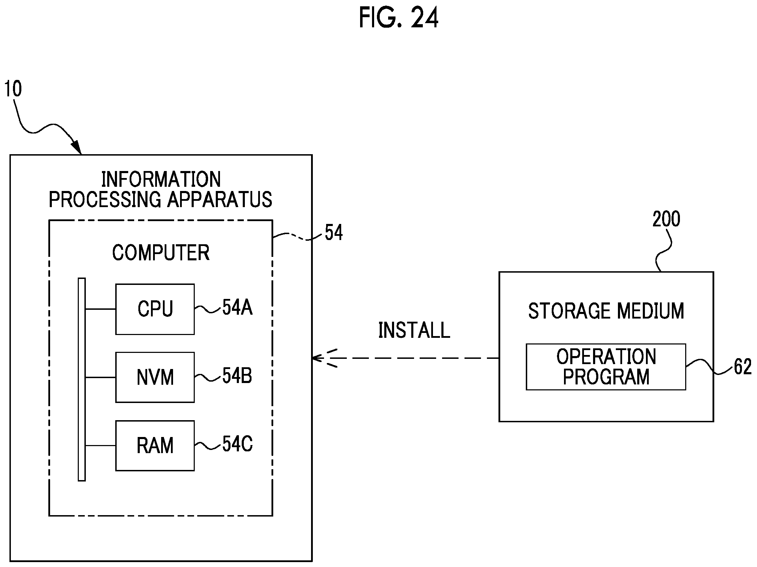

In addition, while an example of a form of storing the operation program 62 in the NVM 54B has been illustratively described in the embodiment, the disclosed technology is not limited thereto. As illustrated in Fig. 24 as an example, the operation program 62 may be stored in a portable storage medium 200. The storage medium 200 is a non-transitory storage medium. Examples of the storage medium 200 include an SSD or a USB memory. The operation program 62 stored in the storage medium 200 is installed on the computer 54, and the CPU 54A executes the registration processing, the behavior information collection processing, and the counting processing in accordance with the installed operation program 62.

In addition, the operation program 62 may be stored in a program memory of another computer, a server apparatus, or the like connected to the computer 54 through a communication network (not illustrated), and the operation program 62 may be downloaded to the information processing apparatus 10 in response to a request of the information processing apparatus 10. In this case, the registration processing, the behavior information collection processing, and the counting processing based on the downloaded operation program 62 are executed by the CPU 54A of the computer 54.

Various processes illustrated below can be used as a hardware resource for executing the registration processing, the behavior information collection processing, and the counting processing. Examples of the processors include, as described above, a CPU that is a general-purpose processor functioning as a hardware resource for executing data processing in accordance with software, that is, a program.

In addition, other examples of the processors include a dedicated electric circuit such as an FPGA, a PLD, or an ASIC that is a processor having a circuit configuration dedicatedly designed to execute specific processing. A memory is incorporated in or connected to any of the processors, and any of the processors executes the data processing using the memory.

The hardware resource for executing the data processing may be composed of one of those various processors or may be composed of a combination of two or more processors of the same type or different types (for example, a combination of a plurality of FPGAs or a combination of a CPU and an FPGA). In addition, the hardware resource for executing the data processing may be one processor.

As an example in which the hardware resource is composed of one processor, first, as represented by a computer such as a client and a server, a form of one processor that is composed of a combination of one or more CPUs and software, and that functions as the hardware resource for executing the data processing is possible. Second, as represented by a system-on-a-chip (SoC) and the like, a form of using a processor that implements functions of the entire system including a plurality of the hardware resources for executing the data processing in one IC chip is possible. Accordingly, the data processing is implemented using one or more of the various processors as the hardware resource.

Furthermore, more specifically, an electric circuit in which circuit elements such as semiconductor elements are combined can be used as a hardware structure of those various processors.

In addition, the data processing is merely an example. Accordingly, unnecessary steps may be deleted, new steps may be added, or a processing order may be changed without departing from the gist of the disclosed technology. Furthermore, the disclosed technology also applies to, in addition to the program, a storage medium that stores the program in a non-transitory manner, such as the storage medium 200 illustrated in Fig. 24.

Above described contents and illustrated contents are detailed descriptions for parts according to the embodiment of the disclosed technology and are merely an example of the disclosed technology. For example, description related to the above configurations, functions, actions, and effects is description related to an example of configurations, functions, actions, and effects of the parts according to the embodiment of the disclosed technology. Thus, unnecessary parts may be removed, new elements may be added, or parts may be replaced in the above described contents and the illustrated contents without departing from the gist of the disclosed technology. In addition, particularly, description related to common technical knowledge or the like that does not need to be described in terms of embodying the disclosed technology is omitted in the above described contents and the illustrated contents in order to avoid complication and to facilitate understanding of the parts according to the embodiment of the disclosed technology.

In the present specification, "A and/or B" has the same meaning as "at least one of A or B". This means that "A and/or B" may be only A, only B, or a combination of A and B. In addition, in the present specification, the same approach as "A and/or B" is applied to a case where three or more matters are represented by connecting the matters with "and/or".

All documents, patent applications, and technical standards disclosed in the present specification are incorporated in the present specification by reference to the same extent as in a case where each of the documents, patent applications, technical standards are specifically and individually indicated to be incorporated by reference.

## Claims

1. An information processing apparatus comprising:
at least one processor,
wherein the processor is configured to:
acquire an image of a participant participating in an event; and
output a two-dimensional code in which attribute information indicating an attribute of the participant estimated based on the image and identification information assigned for each participant are coded.

2. The information processing apparatus according to claim 1,
wherein the two-dimensional code is outputable to a printer.

3. The information processing apparatus according to claim 2,
wherein the image is also outputable to the printer in addition to the two-dimensional code.

4. The information processing apparatus according to any one of claims 1 to 3,
wherein the processor is configured to store the attribute information and the identification information in a database in association with each other.

5. The information processing apparatus according to claim 4,
wherein the processor is configured to:
receive behavior information of the participant corresponding to the two-dimensional code; and
store the received behavior information in the database in association with the identification information included in the two-dimensional code.

6. The information processing apparatus according to claim 5,
wherein the processor is configured to:
receive a viewing request including the two-dimensional code; and
output the behavior information stored in the database in association with the identification information included in the two-dimensional code to a request source of the viewing request.

7. The information processing apparatus according to claim 5 or 6,
wherein the processor is configured to output a counting result obtained by counting the behavior information stored in the database for each identification information included in the two-dimensional code.

8. The information processing apparatus according to any one of claims 5 to 7,
wherein in a case where the event is held in a customer-attracting facility tenanted by a plurality of stores, the behavior information includes at least one of a store name at which the participant has purchased a product, a purchase time point, a list of the purchased product, a quantity of the product, or a price of the product.

9. The information processing apparatus according to claim 8,
wherein the behavior information is acquired through a shopping information management system operated by the stores.

10. The information processing apparatus according to any one of claims 1 to 9,
wherein the attribute information includes at least one of a sex or an age of the participant estimated from the image.

11. The information processing apparatus according to any one of claims 1 to 10,
wherein in a case where a plurality of participants are captured in the image, the attribute information includes a personal relationship among the plurality of participants estimated from the image.

12. The information processing apparatus according to any one of claims 1 to 11,
wherein the processor is configured to estimate the attribute information by performing image analysis on the image.

13. The information processing apparatus according to any one of claims 1 to 12,
wherein the image is a video image, and
the attribute information is information obtained by averaging the attributes estimated based on images of a plurality of frames included in the video image.

14. An operation method of an information processing apparatus, the method comprising:
acquiring an image of a participant participating in an event; and
outputting a two-dimensional code in which attribute information indicating an attribute of the participant estimated based on the image and identification information assigned for each participant are coded.

15. An operation program of an information processing apparatus causing a computer to function as:
an acquisition unit that acquires an image of a participant participating in an event; and
an output unit that outputs a two-dimensional code in which attribute information indicating an attribute of the participant estimated based on the image and identification information assigned for each participant are coded.

16. An information management system comprising:
a reception apparatus including a camera and a printer; and
an information processing apparatus communicably connected to the reception apparatus,
wherein the camera acquires an image of a participant participating in an event,
the information processing apparatus includes at least one processor,
the processor is configured to output, to the printer, a two-dimensional code in which attribute information indicating an attribute of the participant estimated based on the image acquired through the camera and identification information assigned for each participant are coded, and
the printer prints the image and the two-dimensional code on one card.

17. The information management system according to claim 16,
wherein the card is an instant film.
